# FASCICULE DE BREVET EUROPEEN

(11) **EP 3 051 149 B1**
(45) Date de publication et mention de la délivrance du brevet: **02.06.2021**
(21) Numéro de dépôt: 16152489.7
(22) Date de dépôt: 22.01.2016
(51) Int. Cl.: F15B 15/28, F16J 15/18, B64C 25/22

(54) **ACTIONNEUR D'ATTERRISSEUR D'AÉRONEF COMPRENANT UN SYSTÈME DE COMMANDE COMPORTANT UNE TIGE DE COMMANDE**
FLUGZEUGLANDINGAKTUATOR BEINHALTEND EINES STEUERUNGSSYSTEMS, DAS EIN SCHALTGESTÄNGE UMFASST
AIRCRAFT LANDING ACTUATOR INCLUDING A CONTROL SYSTEM COMPRISING A CONTROL ROD

(30) Priorité: 02.02.2015 FR 1550799
(43) Date de publication de la demande: 03.08.2016
(73) Titulaire: Safran Landing Systems, 78140 Vélizy-Villacoublay (FR)
(72) Inventeur: ATAMAN, Gary, Whitby, Ontario L1P 1L5 (CA)
(74) Mandataire: Lavialle, Bruno François Stéphane

(56) Documents cités:
- WO-A2-2011/046351
- CA-A1- 2 576 801
- DE-A1- 2 313 215
- FR-A1- 2 546 242
- JP-A- S63 243 509
- US-A- 3 047 682
- US-A- 4 559 865
- US-A1- 2014 102 293

## Description

L'invention porte sur le domaine général des actionneurs d'atterrisseur d'aéronef comprenant des systèmes de commande s'étendant entre :
- une première zone située dans une enceinte hydraulique délimitée par une paroi d'enceinte ; et
- une seconde zone située à l'extérieur de ladite enceinte hydraulique et comportant une tige de commande s'étendant entre ces zones pour transmettre un effort d'une zone à l'autre.

### ARRIERE PLAN DE L'INVENTION

Un tel système nécessite de réaliser une étanchéité entre les première et seconde zones et tout autour de la tige de commande.

Cette étanchéité est couteuse à réaliser et susceptible de se dégrader dans le temps notamment du fait de l'usure occasionnée par les déplacements répétés de la tige de commande.

Les documents JPS63243509A, DE2313215A1 et FR2546 242A1 divulguent des systèmes de commande selon l'état de la technique. Le document US4559865A divulgue un système de commande avec une pièce de guidage coulissant entre deux positions. Le document CA2576801A1 divulgue un actionneur d'atterrisseur d'aéronef selon l'état de la technique.

### OBJET DE L'INVENTION

Un objet de l'invention est de fournir un actionneur d'atterrisseur d'aéronef avec système de commande dont l'étanchéité autour de la tige de commande, entre la première zone intérieure à l'enceinte hydraulique et la seconde zone extérieure à l'enceinte hydraulique peut être facilement maintenue.

### RESUME DE L'INVENTION

A cette fin, il est proposé selon l'invention un actionneur d'atterrisseur tel que défini dans la revendication 1.

L'invention présente plusieurs avantages comme :
1 minimiser le coût de fabrication de l'assemblage ;
2 localiser la surface de friction soumise à l'usure sur une pièce peu couteuse et amovible de l'assemblage, en l'occurrence la pièce de guidage, plutôt que sur la pièce hydraulique couteuse dans laquelle est formée l'enceinte hydraulique contenant la première zone ;
3 Minimiser le rebut des pièces de coût élevé en positionnant les zones de friction usinées sur la pièce de guidage amovible et de faible coût plutôt que sur la pièce hydraulique fixe et de coût élevé.

Ce mode de réalisation permet d'extraire, depuis l'extérieur de l'enceinte hydraulique, la pièce de guidage pour, par exemple, réaliser la maintenance de l'étanchéité. La pièce de guidage peut être démontée pour être rénovée / traitée pour améliorer l'étanchéité périphérique de la tige de commande.

Grâce à l'invention, la fonction d'étanchéité dynamique autour de la tige de commande mobile est réalisée de manière fiable et à faible coût en la déportant de la pièce hydraulique définissant l'enceinte hydraulique vers la pièce de guidage qui est peu couteuse et facile à remplacer. Ainsi, le système de commande permet, à moindre coût, de détecter une position de coulissement de piston hydraulique dans la première zone haute pression. En fonction de la position de coulissement du piston hydraulique dans la première zone haute pression, la tige de commande déplace la pièce métallique disposée dans la seconde zone moyenne pression.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:
- La figure 1 représente une vue en coupe longitudinale d'une portion d'un actionneur d'atterrisseur d'aéronef équipé du système de commande selon l'invention ;
- la figure 2 illustre une vue en coupe transversale de l'actionneur de la figure 1 avec une pièce de guidage en rotation de la tige de commande, cette pièce de guidage étant insérée de manière amovible dans un alésage traversant une paroi d'enceinte hydraulique ;
- la figure 3 illustre un mode de réalisation particulier de l'assemblage entre la pièce de guidage et la paroi d'enceinte, ici la butée axiale entre la pièce de guidage utilise un lamage de l'alésage et un collet formé sur cette pièce de guidage, ce collet ayant une forme complémentaire au lamage ;
- la figure 4 illustre, le même assemblage entre la pièce de guidage et la paroi d'enceinte hydraulique qu'à la figure 3 mais ici la pièce de guidage n'est pas une pièce de guidage en rotation par une rotule, mais une pièce de guidage en translation de la tige ;
- la figure 5 illustre un autre mode d'assemblage entre la pièce de guidage et la paroi de l'enceinte hydraulique, ici une gorge est formée dans l'alésage et un anneau élastique introduit dans la gorge forme une butée axiale de la pièce de guidage insérée dans l'alésage.

### DESCRIPTION DETAILLEE DE L'INVENTION

Comme indiqué précédemment, l'invention porte sur un actionneur d'atterrisseur d'aéronef comprenant un système de commande 1 comportant une tige de commande 5 s'étendant entre :
- une première zone 2 située dans une enceinte hydraulique délimitée par une paroi d'enceinte 3 ; et
- une seconde zone 4 située à l'extérieur de l'enceinte hydraulique.

Un passage 8, en l'occurrence un alésage 8, est formé au travers de la paroi d'enceinte 3 et s'étend entre les première et seconde zones 2, 4. Une pièce de guidage 7 est disposée à l'intérieur de ce passage 8 et est assemblée de manière amovible vis-à-vis de la paroi d'enceinte 3. La tige de commande 5 passe au travers du passage 8 en traversant cette pièce de guidage qui est évidée en son centre. Une première extrémité 5a de la tige 5 est placée dans la première zone 2 et une seconde extrémité 5b de la tige est placée dans la seconde zone 4. Des moyens d'étanchéité 6, en l'occurrence au moins un joint torique 22, sont disposés autour et contre la tige de commande 5 pour s'opposer au passage de fluide, le long de la tige 5, entre les première et seconde zones 2, 4. Ces moyens d'étanchéité 6 sont assemblés à l'intérieur de la pièce de guidage 7 et sont conformés pour autoriser un déplacement relatif de la tige 5 par rapport à la pièce de guidage 7 tout en réalisant l'étanchéité dans la pièce de guidage, le long de la tige 5, entre lesdites première et seconde zones 2, 4.

La première zone 2 est destinée à recevoir un fluide à haute pression hydraulique et la seconde zone 4 est destinée à recevoir un fluide plus faible pression hydraulique relativement à ladite haute pression.

Le guidage en déplacement de la tige de commande 5 par rapport à la paroi de l'enceinte hydraulique 3 est réalisé via la pièce de guidage 7 insérée dans l'alésage 8 de la paroi 3. Les moyens d'étanchéité 6 qui sont à l'intérieur de cette pièce de guidage 7 sont amovibles par rapport à cette pièce qui est elle-même amovible par rapport à la paroi 3.

Le fait que le guidage et l'étanchéité contre la tige de commande 5 soient réalisés dans un insert, en l'occurrence dans la pièce de guidage 7, permet localiser ces fonctions dans une seule pièce 7 de petite taille relativement à la taille de la pièce hydraulique 3'.

Ainsi, lorsque l'on constate un défaut de guidage ou d'étanchéité autour de la tige de commande 5, il n'est pas nécessaire de remplacer la pièce hydraulique 3', mais il suffit d'extraire la pièce de guidage 7 et de la rénover ou la remplacer par une nouvelle pièce de guidage 7 et/ou de rénover ou remplacer les moyens d'étanchéité 6.

L'invention permet de simplifier la fabrication et la maintenance du système de commande 1. Elle permet aussi de réduire l'usure et le risque d'endommager la pièce hydraulique 3' contenant l'enceinte haute pression lors d'opérations de maintenance.

Typiquement, le système de commande 1 est intégré à un actionneur d'atterrisseur d'aéronef 25, selon l'invention et la pièce hydraulique 3' dont la paroi 3 délimite l'enceinte hydraulique est une pièce massive de l'actionneur. L'étanchéité 6 peut être refaite autour de la tige tout en conservant la pièce 3' assemblée au reste de l'atterrisseur. On limite ainsi la durée d'immobilisation de l'atterrisseur et le besoin de mise au rebut la pièce hydraulique 3'.

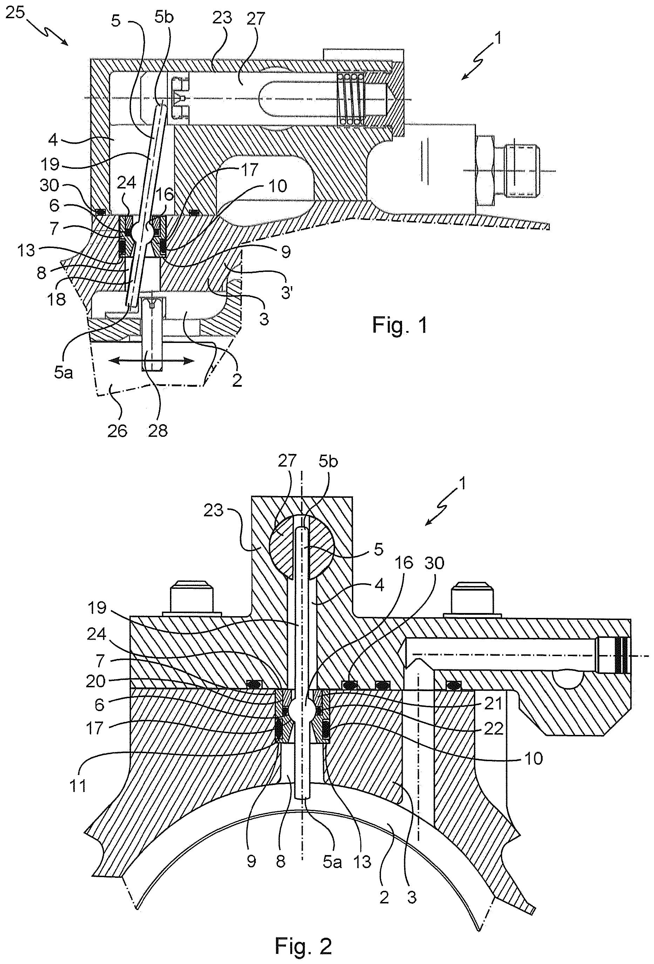

Comme on le voit sur la figure 1, cet actionneur 25 comporte un piston hydraulique 26 monté coulissant à l'intérieur de la première zone 2 de l'enceinte hydraulique. Une première partie de la tige de commande 5 s'étend dans cette première zone 2 pour être déplacée soit directement, soit indirectement par ledit piston 26 lors de son déplacement.

Dans cet exemple particulier, une portion du piston 26 porte un index 28 qui se déplace avec le piston 26 lors de certains au moins de ses déplacements axiaux dans la première zone 2. Cet indexe 28 est disposé pour venir en contact contre la tige de commande 5 afin de la déplacer par rapport à la pièce de guidage 7 et ainsi commander une action dans la seconde zone 4, à l'extérieur de l'enceinte. Une pièce métallique 27 est disposée dans cette seconde zone 4 pour y être déplacée par une partie de la tige de commande 5 qui se trouve dans cette seconde zone 4, en fonction de la position de coulissement du piston hydraulique 26.

L'actionneur 25 comporte des moyens de détection du déplacement de la pièce métallique 27 dans cette seconde zone 4. Ces moyens de détection sont disposés à l'écart de la première zone haute pression et peuvent comprendre un capteur électronique de type capteur magnétique et/ou capacitif détectant la proximité de la pièce métallique 27 par rapport au capteur.

Ainsi, le système de commande 1 permet de commander, depuis l'intérieur de l'enceinte, le déplacement de la pièce métallique 27 à l'extérieur de l'enceinte. La détection du déplacement de la pièce métallique 27 permet de détecter une position de coulissement du piston hydraulique 26 dans l'enceinte.

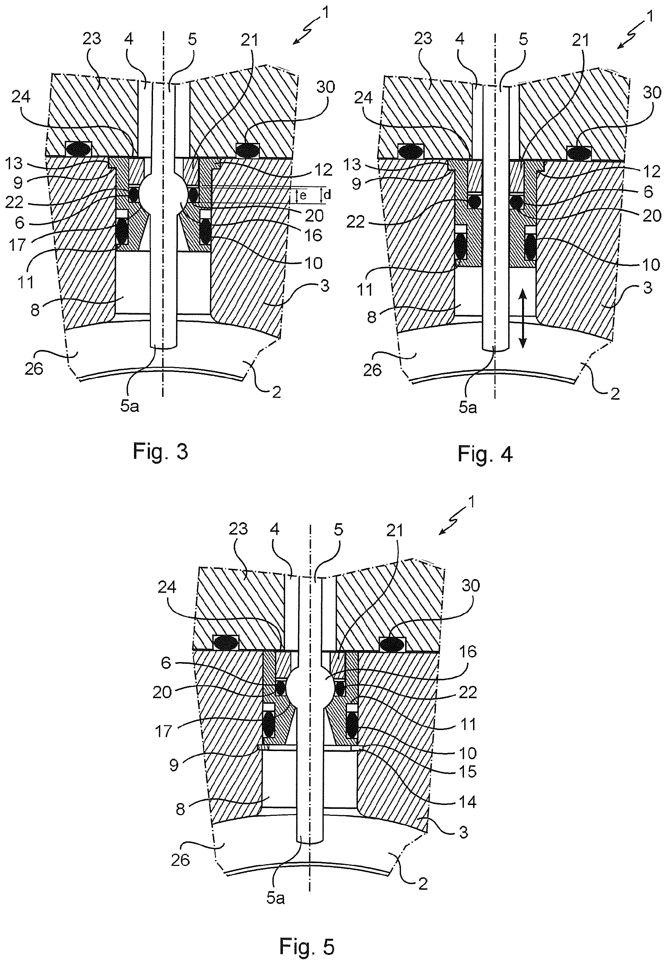

Différents modes de réalisation de l'assemblage entre la pièce de guidage 7 et la paroi 3 vont maintenant être décrits. Chacun de ces modes peut s'appliquer tant pour le cas où le déplacement / guidage de la tige est rotulant, comme sur les exemples des figures 1, 2, 3, 5 que pour le cas où le déplacement / guidage de la tige est une translation linéaire selon un axe longitudinal de la tige, comme sur la figure 4.

Dans tous ces assemblages de la pièce 7 dans l'alésage 8, on constate que :
- la pièce de guidage 7 est en butée axiale contre des premiers moyens de butée axiale 9 s'opposant au déplacement de la pièce 7 vers la première zone 2 ;
- que l'alésage 8 est conformé pour autoriser l'extraction de la pièce de guidage 7 hors de l'alésage 8 par un coulissement de la pièce de guidage 7 en direction de la seconde zone 4 ; et
- que la pièce de guidage 7 est en butée axiale contre des seconds moyens de butée axiale 24 interdisant l'extraction de cette pièce 7 hors de l'alésage 8, ces seconds moyens de butée 24 sont amovibles.

Dans chacun des exemples d'assemblage entre la pièce de guidage 7 et la paroi 3, on constate que la pièce de guidage 7 est une pièce de révolution s'étendant selon un axe de révolution confondu avec l'axe principal de l'alésage 8 dans lequel est insérée / emmanchée cette pièce de guidage 7.

Dans les exemples des figures 1, 2, les premiers moyens de butée axiale 9 sont réalisés par un lamage 13 formé dans l'alésage 8 et s'étendent le long de toute la pièce de guidage 7. L'extrémité axiale de la pièce de guidage orientée vers / du côté de la première zone 2, est en appui axial contre le fond de ce lamage 13.

Dans les exemples des figures 3 et 4, la pièce de guidage 7 présente un épaulement annulaire externe 12 situé au voisinage de son extrémité qui est orientée vers la seconde zone 4. Ici, le lamage 13 s'étend le long d'une portion seulement de la pièce 7 et est formé à l'extrémité de l'alésage 8 qui est orienté vers / placée du côté de la seconde zone 4. L'épaulement annulaire externe 12 est en appui axial contre ce lamage 13.

Dans l'exemple de la figure 5, les premiers moyens de butée axiale 9 comportent un anneau élastique 14 s'étendant dans une gorge annulaire 15 formée à la périphérie interne de l'alésage 8. Cet anneau est disposé entre la pièce de guidage 7 et la première zone 2 et s'oppose au déplacement de la pièce de guidage 7 vers la première zone 2.

Dans chacun des exemples des figures 1 à 5, un bloc externe creux 23 est disposé de manière à définir ladite seconde zone 4 à l'extérieur de l'enceinte. Cette seconde zone 4 est majoritairement formée à l'intérieur du bloc externe creux 23. Ce bloc externe creux 23 est assemblé de manière amovible contre ladite paroi d'enceinte 3 et à l'extérieur de cette enceinte 3. Une partie de ce bloc externe creux 23 s'étend en vis-à-vis de l'alésage 8 de manière à former les seconds moyens de butée axiale 24 qui interdisent l'extraction de la pièce de guidage 7 hors de l'alésage 8.

Au moins un joint d'étanchéité 30 annulaire de l'alésage 8 est placé entre la paroi 3 et une face du bloc externe creux 23 de manière à réaliser tout autour de l'extrémité de l'alésage 8, une étanchéité entre la paroi 3 et ce bloc externe creux 23. Ce joint 30 s'oppose au passage de fluide entre la seconde zone 4 et l'extérieur du système selon l'invention.

L'étanchéité entre les première et seconde zones 2, 4 est aussi réalisée :
- au niveau de l'extérieur de la pièce de guidage 7 à l'aide d'un joint d'étanchéité 10 s'étendant tout autour de cette pièce de guidage 7, entre cette pièce de guidage 7 et une surface interne de l'alésage 8. Dans l'exemple des figures 1 à 5, ce joint d'étanchéité 10 est un joint annulaire, préférentiellement torique, s'étendant dans une gorge annulaire externe 11 formée dans et tout autour de cette pièce de guidage 7 ; et
- au niveau de l'intérieur de la pièce de guidage 7 à l'aide de moyens d'étanchéité 6 disposés à l'intérieur de la pièce de guidage 7, autour et contre la tige de commande 5 pour s'opposer au passage de fluide entre les première et seconde zones 2, 4. Ces moyens d'étanchéité 6 comportent préférentiellement un joint torique 22 en contact contre la tige et contre une surface annulaire interne de la pièce de guidage. Dans les modes des figures 1 à 3 et 5 où la tige comporte une rotule, ce joint 22 est en contact contre la rotule et autorise le pivotement de la tige tout en assurant l'étanchéité.

Dans chacun des modes de réalisation des figures 1 à 3 et 5, la tige de commande 5 présente une rotule 16 formée entre des extrémités terminales 5a, 5b de cette tige de commande 5. La pièce de guidage 7 comporte un siège de rotule 17 formé à l'intérieur de la pièce de guidage 7 et contre lequel est positionnée la rotule 16 pour permettre à la tige de commande 5 de pivoter autour d'un point central de la rotule et par rapport au siège de rotule 17 qui forme un appui annulaire de la rotule 16.

La rotule 16 présente une surface annulaire formant une portion de sphère et la tige 5 comporte une première portion 18 s'étendant depuis la rotule 16 jusqu'à la première zone 2 dans laquelle elle pénètre et une seconde portion 19 s'étendant depuis la rotule 16 jusqu'à la seconde zone 4 dans laquelle elle pénètre.

La première portion 18 est agencée pour commander depuis la première zone 2, le pivotement de la rotule 16 vis-à-vis du siège de rotule 17 et par conséquent le déplacement de la seconde portion 19 dans la seconde zone. Ceci entraîne le déplacement par coulissement de la pièce métallique 27 dans cette seconde zone.

La pièce de guidage 7 présente un lamage 20 formé entre le siège de rotule 17 et la seconde zone 4. Une bague annulaire de retenue 21 est disposée à l'intérieur de ce lamage 20 de manière à coincer la rotule 16 entre le siège de rotule 17 et cette bague annulaire de retenue 21.

On constate que le joint torique 22 est positionné entre la bague 21 et le siège de rotule 17. Ce joint 22 qui entoure la rotule est en contact radial contre la rotule 16 et contre une surface plane interne annulaire du lamage réalisé dans la pièce de guidage.

Ce joint torique 22 présente une épaisseur e inférieure à une distance d formée axialement entre une surface plane interne annulaire du lamage 20 et la bague annulaire de retenue 21. Ainsi, ce joint torique 22 est serré radialement entre la rotule 16 et la pièce de guidage 7 tout en pouvant se déplacer axialement entre la surface plane interne annulaire du lamage 20 et la bague annulaire de retenue 21. Ceci permet une légère adaptation du joint à d'éventuels défauts de forme de la rotule. La précision de l'usinage peut ainsi être minimisée.

Idéalement, la partie du bloc externe creux 23 qui s'étend en vis-à-vis de l'alésage 8 vient aussi en vis-à-vis de la bague annulaire de retenue 21 pour s'opposer à l'extraction de la bague annulaire de retenue 21 vis-à-vis du lamage 20 réalisé dans la pièce de guidage 7.

L'assemblage du système de commande 1 est simplifié puisqu'il suffit :
- de faire coulisser la pièce de guidage 7 dans l'alésage 8 traversant la paroi d'enceinte 3 jusqu'à ce que cette pièce 7 soit en appui contre les premiers moyens de butée axiale 9 ; puis
- de positionner le bloc externe 23 à l'extérieur de la paroi d'enceinte pour qu'il enserre à la fois la pièce de guidage 7 et la bague annulaire de retenue 21 entre la paroi d'enceinte 3 et ce bloc externe 23.

Cet assemblage nécessite peu d'opérations et garantie :
- via le joint torique 22, l'étanchéité entre la pièce de guidage 7 et la tige de commande 5 ;
- via le joint torique 10, l'étanchéité entre la pièce de guidage 7 et la paroi d'enceinte 3 ;
tout en permettant à la tige de commande 5 de se déplacer de manière étanche vis-à-vis de la paroi d'enceinte 3.

Par ailleurs, en cas d'usure de la tige 5 ou des joints 10, 22 ou des surfaces de glissement entre la rotule 16 et le siège de rotule 17, on peut simplement remplacer ces pièces 5, 7, 10, 22 sans avoir à modifier ou mettre au rebut la pièce hydraulique 3 formant l'enceinte hydraulique.

Un procédé de rénovation d'un actionneur d'atterrisseur d'aéronef tel que défini précédemment, comporte une étape de réalisation dudit alésage 8 dans un passage déjà existant de la paroi d'enceinte 3 et une étape d'insertion de ladite pièce de guidage 7 de tige dans cet alésage de manière à ce que la tige de commande s'étende entre les première et seconde zones 2 et 4. Une fois cette pièce de guidage 7 coincée entre les premiers et seconds moyens de butée axiale 24, la tige peut alors être guidée tout en assurant le respect d'étanchéité entre les zones 2 et 4.

Ce procédé permet de rénover à moindre coût l'étanchéité entre les première et seconde zones 2, 4. La mise au rebut de la pièce hydraulique 3' peut être évitée et on peut ainsi prolonger à faible coût, la vie de l'atterrisseur.

## Revendications

1. Actionneur d'atterrisseur d'aéronef (25) comprenant un système de commande (1) comportant une paroi d'enceinte (3) délimitant une enceinte hydraulique, le système de commande (1) comportant également une tige de commande (5) s'étendant entre :
- une première zone (2) située dans ladite enceinte hydraulique délimitée par la paroi d'enceinte (3) ; et
- une seconde zone (4) située à l'extérieur de ladite enceinte hydraulique l'actionneur d'atterrisseur d'aéronef comprenant en outre un piston hydraulique (26) monté coulissant à l'intérieur de la première zone, une première partie de la tige de commande (5) s'étendant dans la première zone (2) pour pouvoir être déplacée par ledit piston (26), une seconde partie de la tige de commande (5) s'étendant dans la seconde zone (4);
le système de commande (1) comportant en outre :
- d'une part un bloc externe creux (23) assemblé de manière amovible contre ladite paroi d'enceinte (3) et à l'extérieur de cette paroi d'enceinte (3), ladite seconde zone (4) étant définie à l'intérieur du bloc externe creux (23) ; et d'autre part
- des moyens d'étanchéité (6) disposés autour et contre cette tige de commande (5) pour s'opposer au passage de fluide entre les première et seconde zones (2, 4) ;
le système étant **caractérisé en ce qu'**il comporte en outre une pièce de guidage (7) assemblée de manière amovible vis-à-vis de la paroi d'enceinte (3), les moyens d'étanchéité (6) étant assemblés à l'intérieur de la pièce de guidage (7) de manière à autoriser un déplacement relatif de la tige (5) par rapport à la pièce de guidage (7) tout en réalisant une étanchéité entre lesdites première et seconde zones (2, 4), la paroi d'enceinte (3) étant traversée par un alésage (8) s'étendant entre lesdites première et seconde zones (2, 4), la pièce de guidage (7) étant placée à l'intérieur de cet alésage (8) et venant en butée axiale contre des premiers moyens de butée axiale (9) s'opposant au déplacement de la pièce de guidage (7) vers la première zone (2) et cet alésage (8) étant conformé pour autoriser l'extraction de la pièce de guidage (7) hors de cet alésage (8) par un coulissement de la pièce de guidage (7) en direction de la seconde zone (4), et une partie du bloc externe creux (23) s'étendant en vis-à-vis dudit alésage (8) traversant la paroi d'enceinte (3) de manière à former des seconds moyens de butée axiale (24) interdisant l'extraction de la pièce de guidage (7) hors de cet alésage (8).

2. Actionneur d'atterrisseur d'aéronef (25) selon la revendication 1, dans lequel le système de commande comporte un joint d'étanchéité (10) qui s'étend autour de la pièce de guidage (7), entre cette pièce de guidage (7) et une surface interne de l'alésage (8) .

3. Actionneur d'atterrisseur d'aéronef (25) selon l'une des revendications 1 ou 2, dans lequel la pièce de guidage (7) présente un épaulement annulaire externe (12), les premiers moyens de butée axiale (9) qui s'opposent au déplacement de la pièce de guidage (7) vers la première zone (2) comportent un lamage (13) formé à une extrémité de l'alésage (8) de la paroi d'enceinte (3) placée du côté de la seconde zone (4), l'épaulement annulaire externe (12) étant en appui axial contre ce lamage (13) de la paroi d'enceinte (3).

4. Actionneur d'atterrisseur d'aéronef (25) selon la revendication 1, dans lequel les premiers moyens de butée axiale (9) comportent un anneau élastique (14) s'étendant dans une gorge annulaire (15) formée à la périphérie de l'alésage (8) traversant la paroi d'enceinte (3), entre la pièce de guidage (7) et la première zone (2).

5. Actionneur d'atterrisseur d'aéronef (25) selon l'une quelconque des revendications 1 à 4, dans lequel la tige de commande (5) présente une rotule (16) formée entre des extrémités terminales (5a, 5b) de cette tige de commande (5), et la pièce de guidage (7) comporte un siège de rotule (17) formé à l'intérieur de la pièce de guidage (7) et contre lequel est positionnée la rotule (16) pour permettre à la tige de commande (5) de pivoter autour d'un point central de la rotule et par rapport au siège de rotule (17) qui forme un appui annulaire de la rotule (16).

6. Actionneur d'atterrisseur d'aéronef (25) selon la revendication 5, dans lequel la rotule (16) présente une surface annulaire formant une portion de sphère et la tige (5) comporte une première portion (18) s'étendant depuis la rotule (16) jusqu'à la première zone (2) et une seconde portion (19) s'étendant depuis la rotule (16) jusqu'à la seconde zone (4), la première portion (18) étant agencée pour commander depuis la première zone (2), le pivotement de la rotule (16) vis-à-vis du siège de rotule (17).

7. Actionneur d'atterrisseur d'aéronef (25) selon la revendication 6, dans lequel la pièce de guidage (7) présente un lamage (20) formé entre le siège de rotule (17) et la seconde zone (4), une bague annulaire de retenue (21) est disposée à l'intérieur de ce lamage (20) de manière à coincer la rotule (16) entre le siège de rotule (17) et cette bague annulaire de retenue (21).

8. Actionneur d'atterrisseur d'aéronef (25) selon la revendication 7, dans lequel ladite partie du bloc externe creux (23) s'étendant en vis-à-vis de l'alésage (8) vient aussi en vis-à-vis de la bague annulaire de retenue (21) pour s'opposer à l'extraction de cette bague annulaire de retenue (21) vis-à-vis du lamage (20) réalisé dans la pièce de guidage (7).

9. Actionneur d'atterrisseur d'aéronef (25) selon l'une quelconque des revendications 7 ou 8, dans lequel les moyens d'étanchéité (6) disposés autour et contre la tige de commande (5) pour s'opposer au passage de fluide entre les première et seconde zones (2, 4) comportent un joint torique (22) entourant la rotule et venant en contact radial contre la rotule et contre une surface plane interne annulaire du lamage réalisé dans la pièce de guidage.

10. Actionneur d'atterrisseur d'aéronef (25) selon la revendication 9, dans lequel le joint torique (22) présente une épaisseur (e) inférieure à une distance (d) formée axialement entre une surface plane interne annulaire du lamage (20) et la bague annulaire de retenue (21) de manière à ce que ce joint torique (22) soit serré radialement entre la rotule (16) et la pièce de guidage (7) et puisse se déplacer axialement entre la surface plane interne annulaire du lamage (20) et la bague annulaire de retenue (21).

11. Actionneur d'atterrisseur d'aéronef (25) selon l'une quelconque des revendications 5 à 10, comprenant en outre une pièce métallique (27) disposée dans ladite seconde zone (4) pour pouvoir y être déplacée par la tige de commande (5) en fonction de la position de coulissement dudit piston hydraulique (26), l'actionneur (25) comportant en outre des moyens de détection du déplacement de la pièce métallique (27) dans la seconde zone (4).

## Patentansprüche

1. Luftfahrzeug-Fahrwerksaktor, umfassend ein Steuersystem (1), das eine Kammerwand (3) umfasst, die eine Hydraulikkammer begrenzt, wobei das Steuersystem (1) ferner eine Steuerstange (5) umfasst, die sich erstreckt zwischen:
- einer ersten Zone (2), die sich in der genannten Hydraulikkammer befindet, die von der Kammerwand (3) begrenzt ist; und
- eine zweite Zone (4), die sich außerhalb der genannten Hydraulickammer befindet; wobei der Luftfahrzeug-Fahrwerksaktor ferner einen hydraulischen Kolben (26) umfasst, der im Inneren der ersten Zone verschiebbar gelagert ist, wobei sich ein erster Teil der Steuerstange (5) in der ersten Zone (2) erstreckt, um von dem genannten Kolben (26) verschoben werden zu können, wobei sich ein zweiter Teil der Steuerstange (5) in der zweiten Zone (4) erstreckt; wobei das Steuersystem (1) ferner umfasst:
- einerseits einen hohlen äußeren Block (23), der auf lösbare Weise an der Kammerwand (3) und auf der Außenseite dieser Kammerwand (3) montiert ist, wobei die genannte zweite Zone (4) im Inneren des hohlen äußeren Blocks (23) definiert ist; und andererseits
- Dichtungsmittel (6), die um und an dieser Steuerstange (5) angeordnet sind, um sich dem Durchtritt von Fluid zwischen der ersten und zweiten Zone (2, 4) zu widersetzen;
wobei das System **dadurch gekennzeichnet ist, dass** es ferner ein Führungsstück (7) umfasst, das auf lösbare Weise in Bezug auf die Kammerwand (3) montiert ist, wobei die Dichtungsmittel (6) im Inneren des Führungsstücks (7) derart montiert sind, dass eine relative Verschiebung der Stange (5) in Bezug auf das Führungsstück (7) gestattet wird, während eine Abdichtung zwischen der ersten und zweiten Zone (2, 4) hergestellt wird, wobei die Kammerwand (3) von einer Bohrung (8) durchsetzt ist, die sich zwischen der ersten und zweiten Zone (2, 4) erstreckt, wobei das Führungsstück (7) im Inneren dieser Bohrung (8) platziert ist und gegen erste axiale Anschlagmittel (9), die sich der Verschiebung des Führungsstücks (7) in Richtung der ersten Zone (2) widersetzten, axial anstößt, und wobei diese Bohrung (8) so geformt ist, dass sie das Herausziehen des Führungsstücks (7) aus dieser Bohrung (8) durch ein Verschieben des Führungsstücks (7) in Richtung der zweiten Zone (4) gestattet, und wobei sich ein Teil des hohlen äußeren Blocks (23) gegenüber der Bohrung (8), die die Kammerwand (3) durchsetzt, derart erstreckt, dass zweite axiale Anschlagmittel (24) gebildet werden, die das Herausziehen des Führungsstücks (7) aus dieser Bohrung (8) verhindern.

2. Luftfahrzeug-Fahrwerksaktor (25) nach Anspruch 1, bei dem das Steuersystem eine Dichtung (10) umfasst, die sich um das Führungsstück (7) zwischen diesem Führungsstück (7) und einer Innenfläche der Bohrung (8) erstreckt.

3. Luftfahrzeug-Fahrwerksaktor (25) nach einem der Ansprüche 1 oder 2, bei dem das Führungsstück (7) eine äußere ringförmige Schulter (12) umfasst, die ersten axialen Anschlagmittel (9), die sich dem Verschieben des Führungsstücks (7) in Richtung der ersten Zone (2) widersetzen, eine Senkung (13) umfassen, die an einem Ende der Bohrung (8) der Kammerwand (3) gebildet ist, das sich auf der Seite der zweiten Zone (4) befindet, wobei die äußere ringförmige Schulter (12) in axialer Anlage an dieser Senkung (13) der Kammerwand (3) ist.

4. Luftfahrzeug-Fahrwerksaktor (25) nach Anspruch 1, bei dem die ersten axialen Anschlagmittel (9) einen elastischen Ring (14) umfassen, der sich in einer ringförmigen Nut (15) erstreckt, die am Umfang der Bohrung (8) ausgebildet ist, die die Kammerwand (3) durchsetzt, zwischen dem Führungsstück (7) und der ersten Zone (2).

5. Luftfahrzeug-Fahrwerksaktor (25) nach einem der Ansprüche 1 bis 4, bei dem die Steuerstange (5) ein Kugelgelenk (16) aufweist, das zwischen Enden (5a, 5b) dieser Steuerstange (5) ausgebildet ist, und das Führungsstück (7) einen Kugelgelenksitz (17) umfasst, der im Inneren des Führungsstücks (7) ausgebildet und gegen den das Kugelgelenk (16) positioniert ist, um der Steuerstange (5) zu ermöglichen, sich um einen zentralen Punkt des Kugelgelenks und in Bezug auf den Kugelgelenksitz (17), der eine ringförmige Anlage für das Kugelgelenk (16) bildet, zu drehen.

6. Luftfahrzeug-Fahrwerksaktor (15) nach Anspruch 5, bei dem das Kugelgelenk (16) eine ringförmige Fläche aufweist, die einen Kugelabschnitt bildet, und die Stange (5) einen ersten Abschnitt (18) umfasst, der sich ab dem Kugelgelenk (16) bis zur ersten Zone (2) erstreckt, sowie einen zweiten Abschnitt (19), der sich ab dem Kugelgelenk (16) bis zur zweiten Zone (4) erstreckt, wobei der erste Abschnitt (18) so ausgebildet ist, dass er ab der ersten Zone (2) das Drehen des Kugelgelenks (16) in Bezug auf den Kugelgelenksitz (17) steuert.

7. Luftfahrzeug-Fahrwerksaktor (25) nach Anspruch 6, bei dem das Führungsstück (7) eine Senkung (20) aufweist, die zwischen dem Kugelgelenksitz (17) und der zweiten Zone (4) ausgebildet ist, ein ringförmiger Haltering (21) im Inneren dieser Senkung (20) derart angeordnet ist, dass er das Kugelgelenk (16) zwischen dem Kugelgelenksitz (17) und diesem ringförmigen Haltering (21) einklemmt.

8. Luftfahrzeug-Fahrwerksaktor (25) nach Anspruch 7, bei dem der genannte Teil des hohlen äußeren Blocks (23), der sich gegenüber der Bohrung (8) erstreckt, ebenfalls gegenüber dem ringförmigen Haltering (21) ankommt, um sich dem Herausziehen dieses ringförmigen Halterings (21) in Bezug auf die in dem Führungsstück (7) ausgebildete Senkung (20) zu widersetzen.

9. Luftfahrzeug-Fahrwerksaktor (25) nach einem der Ansprühe 7 oder 8, bei dem die Dichtungsmittel (6), die um und an der Steuerstange (5) angeordnet sind, um sich dem Durchtritt von Fluid zwischen der ersten und zweiten Zone (2, 4) zu widersetzen, einen Dichtungsring (22) umfassen, der das Kugelgelenk umgibt und der in radialen Kontakt mit dem Kugelgelenk und mit einer ringförmigen inneren ebenen Fläche der in dem Führungsstück ausgebildeten Senkung kommt.

10. Luftfahrzeug-Fahrwerksaktor (15) nach Anspruch 9, bei dem der Dichtungsring (22) eine Dicke (e) aufweist, die kleiner als ein Abstand (d) ist, der axial zwischen einer ringförmigen inneren ebenen Fläche der Senkung (20) und dem ringförmigen Haltering (21) derart gebildet ist, dass dieser Dichtungsring (22) radial zwischen das Kugelgelenk (16) und das Führungsstück (7) eingespannt ist und sich axial zwischen der ringförmigen inneren ebenen Fläche der Senkung (20) und dem ringförmigen Haltering (21) verschieben kann.

11. Luftfahrzeug-Fahrwerksaktor (25) nach einem der Ansprüche 5 bis 10, ferner umfassend ein Metallteil (27), das in der genannten zweiten Zone (4) angeordnet ist, um dort durch die Steuerstange (5) in Abhängigkeit von der Verschiebeposition des genannten hydraulischen Kolbens (26) verschoben werden zu können, wobei der Aktor (25) ferner Detektionsmittel zum Erfassen der Verschiebung des Metallteils (27) in der zweiten Zone (4) umfasst.

## Claims

1. Aircraft landing gear actuator (25), comprising a control system (1) comprising a chamber wall (3) delimiting a hydraulic chamber, the control system (1) further comprising a control rod (5) extending between:
- a first zone (2) situated in said hydraulic chamber delimited by the chamber wall (3); and
- a second zone (4) situated outside said hydraulic chamber, the aircraft landing gear actuator further comprising a hydraulic piston (26) mounted for sliding inside the first zone, a first part of the control rod (5) extending in the first zone (2) so as to be able to be moved by said piston (26), a second part of the control rod (5) extending in the second zone (4);
the control system (1) further comprising:
- on the one hand a hollow external unit (23) assembled removably against the said chamber wall (3) and on the outside of this chamber wall (3), said second zone (4) being inside the hollow external unit (23); and on the other hand
- sealing means (6) arranged around and against this control rod (5) to oppose the passage of fluid between the first and second zones (2, 4);
the system being **characterized in that** it further comprises a guide piece (7) assembled removably with respect to the chamber wall (3), the sealing means (6) being assembled inside the guide piece (7) so as to allow relative movement of the rod (5) with respect to the guide piece (7) while at the same time achieving sealing between the said first and second zones (2, 4), the chamber wall (3) has passing through it a bore (8) extending between the said first and second zones (2, 4), the guide piece (7) being placed inside this bore (8) and coming into axial abutment against first axial-abutment means (9) that oppose the movement of the guide piece (7) towards the first zone (2), and this bore (8) being configured to allow the guide piece (7) to be extracted from this bore (8) by sliding the guide piece (7) towards the first zone (2) and a part of this hollow external unit (23) extending opposite said bore (8) passing through the chamber wall (3) so as to form second axial-stop means (24) preventing the guide piece (7) from being extracted from this bore (8).

2. Aircraft landing gear actuator (25), according to claim 1, wherein the control system comprises a seal (10) extending around the guide piece (7), between this guide piece (7) and an internal surface of the bore (8).

3. Aircraft landing gear actuator (25), according to either one of claims 1 or 2, wherein the guide piece (7) has an external annular shoulder (12), the first axial-abutment means (9) which oppose the movement of the guide piece (7) towards the first zone (2) comprise a counterbore (13) formed at an end of the bore (8) of the chamber wall (3) that is positioned on the same side as the second zone (4), the external annular shoulder (12) bearing axially against this counterbore (13) of the chamber wall (3).

4. Aircraft landing gear actuator (25), according to claim 1, wherein the first axial-abutment means (9) comprise an elastic ring (14) extending in an annular groove (15) formed at the periphery of the bore (8) passing through the chamber wall (3), between the guide piece (7) and the first zone (2).

5. Aircraft landing gear actuator (25), according to any one of Claims 1 to 4, in which the control rod (5) has a ball pivot (16) formed between terminal ends (5a, 5b) of this control rod (5), and the guide piece (7) comprises a ball pivot seat (17) formed inside the guide piece (7) and against which the ball pivot (16) is positioned to allow the control rod (5) to pivot about a central point of the ball pivot and with respect to the ball pivot seat (17) which forms an annular support for the ball pivot (16).

6. Aircraft landing gear actuator (25), according to Claim 5, in which the ball pivot (16) has an annular surface forming a portion of a sphere and the rod (5) comprises a first portion (18) extending from the ball pivot (16) as far as the first zone (2) and a second portion (19) extending from the ball pivot (16) as far as the second zone (4), the first portion (18) being configured to control, from the first zone (2), the pivoting of the ball pivot (16) with respect to the ball pivot seat (17).

7. Aircraft landing gear actuator (25), according to Claim 6, in which the guide piece (7) has a counterbore (20) formed between the ball pivot seat (17) and the second zone (4), an annular retaining ring (21) is arranged inside this counterbore (20) in order to wedge the ball pivot (16) between the ball pivot seat (17) and this annular retaining ring (21).

8. Aircraft landing gear actuator (25), according to Claim 7, wherein said part of this hollow external unit (23) extending opposite the said bore (8) is also opposite the annular retaining ring (21) so as to prevent the annular retaining ring (21) from being extracted from counterbore (20) formed inside the guide piece (7).

9. Aircraft landing gear actuator (25), according to either one of claims 7 or 8, in which the sealing means (6) arranged around and against the control rod (5) to oppose the passage of fluid between the first and second zones (2, 4) comprise an o-ring (22) surrounding the ball pivot and coming into radial contact with the ball pivot and with a planar internal annular surface of the counterbore made in the guide piece.

10. Aircraft landing gear actuator (25), according to Claim 9, in which the o-ring (22) has a thickness (e) smaller than a distance (d) formed axially between a planar internal annular surface of the counterbore (20) and the annular retaining ring (21) so that this o-ring (22) is clamped radially between the ball pivot (16) and the guide piece (7) and can move axially between the planar internal annular surface of the counterbore (20) and the annular retaining ring (21).

11. Aircraft landing gear actuator (25), according to either one of claims 5 to 10, comprising a metal component (27) being placed in this second zone (4) so that it can be moved therein by the control rod (5) according to the position of sliding of the said hydraulic piston (26), the actuator (25) further comprising means for detecting the movement of the metal component (27) in the second zone (4).
